(19) Europäisches Patentamt / European Patent Office / Office européen des brevets

(11) **EP 3 752 823 B1**

(12) **FASCICULE DE BREVET EUROPEEN**

(45) Date de publication et mention
de la délivrance du brevet:
**29.05.2024 Bulletin 2024/22**

(21) Numéro de dépôt: **19702638.8**

(22) Date de dépôt: **08.02.2019**

(51) Classification Internationale des Brevets (IPC):
**G01N 29/06** *(2006.01)*     **G02F 1/35** *(2006.01)*
**G01S 15/89** *(2006.01)*     **H01S 3/00** *(2006.01)*

(52) Classification Coopérative des Brevets (CPC):
**G01N 29/2418; G01N 29/28; G01N 29/348;
G10K 15/046**

(86) Numéro de dépôt international:
**PCT/EP2019/053094**

(87) Numéro de publication internationale:
**WO 2019/154967 (15.08.2019 Gazette 2019/33)**

(54) **OSCILLATEUR PARAMÉTRIQUE PHONONIQUE**

PARAMETRISCHER PHONONOSZILLATOR

PHONON PARAMETRIC OSCILLATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.02.2018 FR 1851155**

(43) Date de publication de la demande:
**23.12.2020 Bulletin 2020/52**

(73) Titulaires:
• **Centre National de la Recherche Scientifique
75016 Paris (FR)**
• **Université de Lille
59800 Lille (FR)**
• **Yncrea Hauts-de-France
59800 Lille (FR)**

(72) Inventeur: **DEVOS, Arnaud
59320 Ennetières en Weppes (FR)**

(74) Mandataire: **IPAZ
Bâtiment Platon
Parc Les Algorithmes
91190 Saint-Aubin (FR)**

(56) Documents cités:
WO-A1-2008/097527     WO-A2-2006/132862
US-A1- 2012 263 196

• **IVAN S. GRUDININ ET AL: "Phonon Laser Action
in a Tunable Two-Level System", PHYSICAL
REVIEW LETTERS, vol. 104, no. 8, 1 février 2010
(2010-02-01), XP055531041, US ISSN: 0031-9007,
DOI: 10.1103/PhysRevLett.104.083901**
• **I. MAHBOOB ET AL: "Phonon-cavity
electromechanics", NATURE PHYSICS, vol. 8, no.
5, 1 avril 2012 (2012-04-01), pages 387-392,
XP055531529, GB ISSN: 1745-2473, DOI:
10.1038/nphys2277**
• **SERGIO S MAKLER ET AL: "A source of terahertz
coherent phonons", JOURNAL OF PHYSICS:
CONDENSED MATTER., vol. 10, no. 26, 6 juillet
1998 (1998-07-06), pages 5905-5921,
XP055531001, GB ISSN: 0953-8984, DOI:
10.1088/0953-8984/10/26/017**
• **D. NAVARRO-URRIOS ET AL: "A self-stabilized
coherent phonon source driven by optical
forces", SCIENTIFIC REPORTS, vol. 5, no. 1, 27
octobre 2015 (2015-10-27), XP055531024, DOI:
10.1038/srep15733 cité dans la demande**

**Description**

Le domaine de l'invention est celui des émetteurs d'impulsions acoustiques à très hautes fréquences, typiquement de plusieurs dizaines de gigahertz, voire de plusieurs centaines de gigahertz. Pour ces applications, la durée des impulsions acoustiques est typiquement de l'ordre de la picoseconde. De telles sources acoustiques à très haute fréquence ont différentes applications. On citera notamment la métrologie des couches minces, la microscopie acoustique ou encore la réalisation de sources ou de dispositifs phononiques, dans lesquels les phonons ont le même rôle que les électrons en électronique.

La gamme de fréquences atteintes est au-delà de ce qui est techniquement possible de réaliser avec les techniques traditionnelles de l'acoustique physique comme, par exemple, la transduction piézo-électrique. Il existe cependant différentes techniques pour réaliser ces impulsions.

A titre de premier exemple, la publication intitulée « A self-stabilized cohérent phonon source driven by optical forces », D. Navarro-Urrios et al., scientific reports 5, n°15733, 2015 décrit la réalisation d'un « laser à phonons » mettant en oeuvre un cristal opto-mécanique combinant des propriétés optiques photoniques et acoustiques. Cependant, la gamme de fréquences atteintes reste limitée à 100 mégahertz.

A titre de second exemple, la publication intitulée « A source of terahertz cohérent phonons », Sergio S. Makler et al., Journal of Physics : Condensed Matter, vol 10, n°26 décrit la possibilité de réaliser un laser acoustique ou « SASER », acronyme de « Sound Amplification by Stimulated Emission of Radiation » avec une technologie proche de celle des lasers à cascades quantiques : l'émission d'un photon à chaque transition dans la structure est remplacée par l'émission d'un phonon optique qui se subdivise ensuite en un phonon optique et un phonon acoustique.

Enfin, la technique couramment utilisée pour atteindre ces fréquences et ces durées d'impulsions est obtenue par la technique dite « acoustique picoseconde ». Les impulsions acoustiques sont générées par des impulsions laser focalisées sur un matériau ou une couche de matériau absorbant. Ces impulsions génèrent un échauffement brutal du matériau qui provoque sa dilatation et la génération d'une impulsion acoustique de faible durée. Dans ce domaine, on citera, comme exemple d'application, le brevet US 7 624 640 de Maris et al. intitulé « Opto-acoustic methods and apparatus for performing high resolution acoustic imaging and other sample probing and modification operations ». Ce brevet décrit la réalisation d'un microscope acoustique à très haute fréquence.

Le document « Phonon laser Action in tunable two level system » de Grudinin et al (Physical Review Letters Vol 104 n°8 - 2010) décrit un système émettant de manière cohérente des phonons basé sur une parfaite analogie avec un laser optique. Le mécanisme est celui de l'émission stimulée sur un système à deux niveaux.

Le document US 2012/263196 décrit un système laser à effet Raman qui ne fait intervenir que des impulsions optiques. L'objectif est d'obtenir des impulsions ultracourtes, et pour cela un accord de phase à chaque aller-retour est réalisé. Ce document est tout entier dédié à la génération d'impulsions optiques selon différentes configurations de résonateurs.

Comme il a été dit, une des contraintes majeures de ce type d'émetteurs est d'obtenir des impulsions les plus brèves possibles. Une seconde contrainte est d'obtenir des impulsions acoustiques ayant une certaine énergie sans augmenter de façon trop importante l'énergie des impulsions laser de façon que l'émetteur conserve un encombrement raisonnable. L'oscillateur paramétrique selon l'invention permet d'obtenir des impulsions acoustiques à la fois brèves et intenses sans augmenter la puissance laser nécessaire. Il consiste à créer une cavité acoustique dont les paramètres acoustiques sont adaptés à la durée des impulsions laser. Plus précisément, l'invention a pour objet un oscillateur paramétrique phononique comportant un laser d'émission périodique d'impulsions optiques brèves, lesdites impulsions présentant une durée de l'ordre de quelques dizaines de femtosecondes à quelques centaines de femtosecondes, un ensemble de génération d'impulsions acoustiques et un milieu de couplage des impulsions acoustiques avec un objet, ledit milieu de couplage permettant auxdites impulsions acoustiques traversant ledit milieu de couplage d'atteindre l'objet, l'ensemble de génération d'impulsions acoustiques comportant une face d'entrée, une face de sortie, un milieu de conversion des impulsions optiques brèves en impulsions acoustiques et un milieu de propagation desdites impulsions acoustiques, les faces d'entrée et de sortie étant réfléchissantes aux impulsions acoustiques, le milieu de propagation ayant une épaisseur déterminée, la face de sortie étant au contact avec le milieu de couplage,
caractérisé en ce que le temps d'aller-retour d'une impulsion acoustique par réflexion sur les faces d'entrée et de sortie, est égal à la période d'émission du laser, de façon que l'impulsion acoustique réfléchie soit en phase avec l'impulsion acoustique suivante.

Avantageusement, l'ensemble de génération d'impulsions acoustiques comporte, dans cet ordre, la face d'entrée, le milieu de conversion, le milieu de propagation et la face de sortie.

Avantageusement, l'ensemble de génération d'impulsions acoustiques comporte, dans cet ordre, la face d'entrée, le milieu de propagation, le milieu de conversion et la face de sortie.

Avantageusement, le milieu de conversion et le milieu de propagation sont réalisés sur un seul et même substrat, le milieu de conversion étant implanté sur une des faces du milieu de propagation.

Avantageusement, le milieu de conversion et le milieu de propagation sont réalisés sur un seul et même substrat, le milieu de conversion étant implanté à l'intérieur du milieu de propagation.

Avantageusement, l'oscillateur comporte des moyens d'ajustement de la période du laser d'émission.

Avantageusement, l'oscillateur comporte des moyens électriques ou magnétiques ou thermiques d'ajustement de la vitesse de propagation des impulsions acoustiques dans le milieu de propagation.

Avantageusement, l'épaisseur du milieu de propagation est variable selon un axe perpendiculaire à la direction de propagation des impulsions acoustiques.

Avantageusement, les coefficients de réflexion acoustique de la face d'entrée et de la face de sortie sont supérieurs ou égaux à 90%.

Avantageusement, le laser d'émission est un laser dit « femtoseconde » émettant dans une gamme spectrale comprise entre 680 nanomètres et 1070 nanomètres, sa période étant de 12.5 nanosecondes et la durée des impulsions optiques étant de 100 femtosecondes.

Avantageusement, le laser d'émission est un laser dit « femtoseconde » émettant dans une gamme spectrale comprise entre 750 nanomètres et 900 nanomètres, sa période étant de 1 nanoseconde et la durée des impulsions optiques étant de 100 femtosecondes.

Avantageusement, le milieu de conversion est un milieu absorbant des impulsions optiques.

Avantageusement, le milieu de conversion est un milieu semi-conducteur ou à boîtes quantiques.

Avantageusement, le milieu de propagation est du silicium ou du diamant ou du carbure de silicium ou du saphir.

Avantageusement, le milieu de couplage est un liquide.

L'invention sera mieux comprise et d'autres avantages apparaîtront à la lecture de la description qui va suivre donnée à titre non limitatif et grâce aux figures annexées parmi lesquelles :

La figure 1 représente un oscillateur paramétrique optique selon l'art antérieur ;
La figure 2 représente le synoptique général d'un oscillateur paramétrique phononique selon l'invention ;
La figure 3 représente le principe de fonctionnement de la cavité acoustique selon l'invention ;
La figure 4 représente une première variante de réalisation d'un oscillateur paramétrique phononique selon l'invention ;
La figure 5 représente une seconde variante de réalisation d'un oscillateur paramétrique phononique selon l'invention ;
La figure 6 représente une variante de réalisation du milieu de propagation de l'oscillateur paramétrique.

L'oscillateur paramétrique phononique selon l'invention s'inspire du fonctionnement des oscillateurs paramétriques optiques qui sont mis en oeuvre dans un tout autre domaine technique.

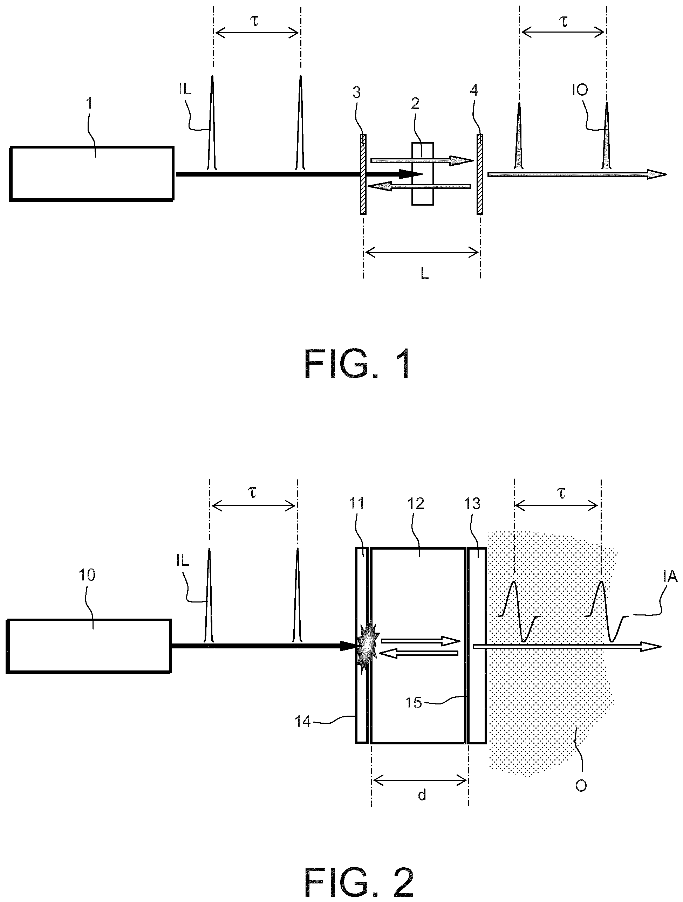

Un oscillateur paramétrique optique est représenté sur la figure 1. Il comporte un laser 1 d'émission d'impulsions optiques ultra-courtes et périodiques, un cristal non-linéaire 2 et une cavité laser composée de deux miroirs 3 et 4. Les impulsions laser IL sont représentées en blanc sur la figure 1, elles ont une durée de l'ordre de quelques centaines de femtosecondes, chaque impulsion est séparée de la suivante d'une période $\tau$ correspondant à la fréquence de répétition du laser à impulsions. Ces impulsions laser sont focalisées dans le cristal non linéaire où elles sont converties en deux impulsions optiques IO de plus basse énergie. Ces impulsions optiques sont représentées en gris sur la figure 1. Les miroirs de la cavité sont conçus pour réfléchir très efficacement l'une ou les deux impulsions optiques ainsi générées.

La longueur L de la cavité est réglable de façon à être exactement accordée au taux de répétition du laser d'émission. Ainsi, une première impulsion laser est convertie en deux nouvelles impulsions optiques lesquelles font un aller-retour dans la cavité pendant un temps égal au temps $\tau$ séparant cette première impulsion laser de la suivante. Quand l'impulsion suivante atteint le cristal non linéaire, les impulsions optiques y arrivent également et la nouvelle conversion s'additionne à la première. Ainsi, s'établit un régime dans lequel chaque impulsion laser est convertie en une ou deux impulsions optiques d'énergie inférieure. La durée de l'impulsion est conservée de sorte que l'oscillateur paramétrique optique est équivalent à une source femtoseconde émettant dans une nouvelle gamme de longueurs d'onde.

L'oscillateur paramétrique phononique selon l'invention fonctionne selon des principes voisins mais appliqué au domaine de la phononique. De façon générale, il comporte un laser d'émission périodique d'impulsions optiques brèves, un ensemble de génération d'impulsions acoustiques et un milieu de couplage des impulsions acoustiques avec un objet, l'ensemble de génération d'impulsions acoustiques comportant une face d'entrée, une face de sortie, un milieu de conversion des impulsions optiques brèves en impulsions acoustiques et un milieu de propagation desdites impulsions acoustiques, les faces d'entrée et de sortie étant réfléchissantes aux impulsions acoustiques, le milieu de propagation ayant une épaisseur déterminée, la face de sortie étant au contact avec le milieu de couplage. Le temps d'aller-retour d'une impulsion acoustique par réflexion sur les faces d'entrée et de sortie, est égal à la période d'émission du laser, de façon que l'impulsion acoustique réfléchie soit en phase avec l'impulsion acoustique suivante.

La figure 2 représente un premier exemple de réalisation d'un oscillateur selon l'invention. Il comporte, dans cet ordre, un laser 10 d'émission périodique d'impulsions optiques IL brèves représentées par des pics sur la figure 2, un milieu de conversion 11 desdites impulsions optiques IL en impulsions acoustiques IA représentées par des sinusoïdes sur la figure 2, un milieu de propagation 12 desdites impulsions acoustiques et un milieu de couplage 13 desdites impulsions acoustiques avec un objet O à étudier. Les impulsions laser IL ont une durée de l'ordre de quelques dizaines de femtosecondes à quelques centaines de femtosecondes, chaque impulsion est séparée de la suivante d'une période τ correspondant à la fréquence de répétition du laser à impulsions.

A titre de premier exemple, le laser d'émission est un laser dit « femtoseconde » émettant dans une gamme spectrale comprise entre 680 nanomètres et 1070 nanomètres, sa période étant de 12.5 nanosecondes et la durée des impulsions optiques étant de 100 femtosecondes. A titre de second exemple, le laser d'émission est un laser femtoseconde émettant dans une gamme spectrale comprise entre 750 nanomètres et 900 nanomètres, sa période étant de 1 nanoseconde et la durée des impulsions optiques étant de 100 femtosecondes.

Le laser est focalisé à l'intérieur du milieu de conversion. Typiquement, le diamètre de la tache de focalisation est de l'ordre de 10 μm ou de quelques dizaines de 10 μm. A titre d'exemple, la puissance du laser de pompe du laser impulsionnel est de l'ordre de 100 mW.

Le milieu de conversion peut agir par absorption optique puis expansion thermique. On peut utiliser à cette fin une couche métallique. Ce milieu peut également être une structure semi-conductrice à puits quantiques ou boîtes quantiques. Dans cet exemple, la face d'entrée 14 correspond à la face d'entrée du milieu de conversion et est parfaitement réfléchissante aux impulsions acoustiques.

Le milieu de propagation comporte une épaisseur d et une face de sortie 15. La face de sortie est au contact avec le milieu de couplage, la face de sortie étant réfléchissante aux impulsions acoustiques.

Il existe une façon simple d'obtenir une face d'entrée ou de sortie parfaitement réfléchissante. Il suffit que cette face corresponde à une interface matière/air ou air/matière.

A titre d'exemples non limitatifs, le milieu de propagation est du silicium ou du diamant ou du carbure de silicium ou du saphir.

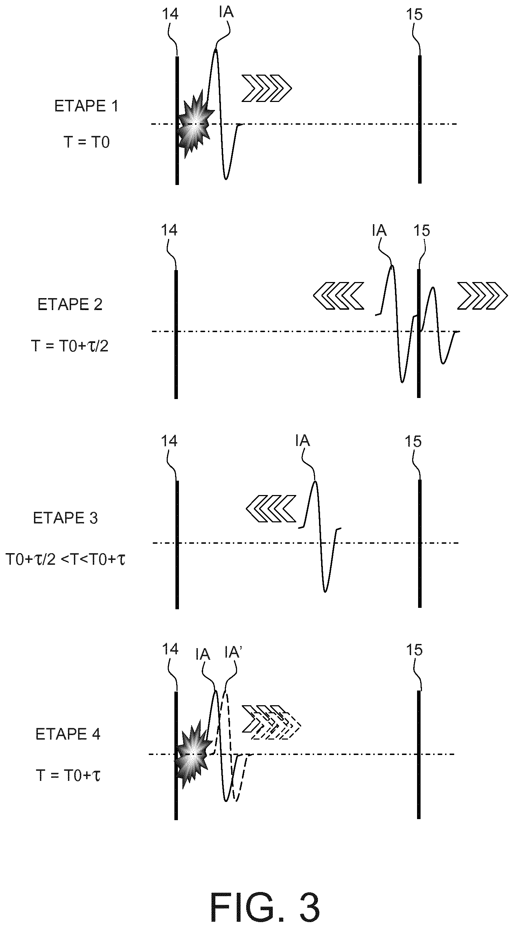

Le fonctionnement de cet oscillateur paramétrique phononique est représenté sur la figure 3 qui décrit les étapes importantes du fonctionnement. A un instant T0, une impulsion laser est convertie en impulsion acoustique IA par le milieu de conversion. Une fois l'impulsion acoustique générée, elle se propage dans le milieu de propagation comme représentée sur l'étape 2 de la figure 3. A un instant T égal à T0+τ/2, l'impulsion est réfléchie en partie par la face de sortie 15 et revient sur elle-même, traverse une seconde fois le milieu de propagation et atteint le milieu de conversion à l'instant T0+τ. La partie transmise de l'impulsion acoustique traverse le milieu de couplage et atteint l'objet. Ce milieu de couplage est, par exemple, un liquide.

Le temps d'aller-retour, dans le milieu de propagation par réflexion sur la face de sortie, de cette impulsion acoustique est égal à la période d'émission du laser, de façon que l'impulsion acoustique réfléchie soit en phase avec l'impulsion acoustique générée suivante IA' comme représentée sur l'étape 4 de la figure 3. Cette seconde impulsion acoustique est représentée en pointillés sur la figure 3. La face d'entrée 14 étant parfaitement réfléchissante, la première impulsion retraverse le milieu de propagation et de nouveau une partie de cette impulsion est transmise.

Il est clair également qu'après un aller-retour, les impulsions doivent être orientées dans le même sens de façon que leurs amplitudes s'ajoutent. Après une réflexion sur une face, il peut y avoir un changement de signe de l'amplitude de l'impulsion. Il est compensé par le même changement de signe par réflexion sur l'autre face.

Ainsi, la réflexion sur la surface 15 peut avoir un coefficient de réflexion négatif. Cette condition est remplie dans la majorité des applications, en particulier, lorsque le couplage est réalisé par un liquide qui possède une impédance inférieure à celle d'un solide. Le point important est que la phase de l'onde acoustique soit identique à l'initiale après deux réflexions.

Ainsi, l'intensité des impulsions acoustiques transmises au milieu de couplage correspond à la somme des intensités des impulsions en phase ayant fait au moins un aller-retour dans le milieu de propagation.

Le gain apporté par l'oscillateur selon l'invention par rapport à un oscillateur où les impulsions acoustiques sont directement émises est important. Son calcul est le suivant. On appelle r l'amplitude du coefficient de réflexion de la face de sortie de la zone de propagation, d la longueur du milieu de propagation et α le coefficient d'atténuation acoustique par unité de longueur dans le milieu de propagation, ce coefficient α augmente avec le carré de la fréquence acoustique. Comme on l'a vu, le coefficient de réflexion r peut être négatif selon le type de réflexion.

Ce coefficient décroît avec la température et il est préférable de travailler à basse température, c'est-à-dire pour des températures comprises entre quelques kelvins et quelques dizaines de kelvins.

L'atténuation A d'une impulsion acoustique ayant effectuée un aller retour vaut donc :

$$A = r.\exp(-2\alpha d)$$

Le G gain apporté par l'oscillateur est égal à la somme des atténuations des impulsions acoustiques ayant fait n allers-retours, n étant un nombre entier ; On peut écrire :

$$G = 1 + A + A^2 + A^3 + A^4 + \ldots$$

Pour un grand nombre de termes, ce gain vaut

classiquement :

$$G = 1/(1-A)$$

Ce gain atteint des valeurs élevées si le coefficient de réflexion de la face de sortie est important et si le coefficient d'atténuation acoustique par unité de longueur dans le milieu de propagation est faible ou si l'épaisseur traversée est faible.

Le coefficient $\alpha$ augmentant avec le carré de la fréquence acoustique, il est plus facile d'obtenir des gains importants à basse fréquence qu'à haute fréquence.

A titre d'exemple, si l'atténuation A est supérieure à 90 %, le gain G dépasse 10.

Les deux tableaux ci-dessous donnent des ordres de grandeur des gains obtenus pour quatre types de matériaux, deux fréquences de répétition, deux fréquences acoustiques différentes, différentes épaisseurs et un coefficient de réflexion de 99%.

TABLEAU I

| Fréquence de répétition : 80 MHz<br>Fréquence acoustique : 10 GHz | | |
|---|---|---|
| Matériau | Epaisseur en $\mu$m | Gain |
| Silicium | 52.5 | 66 |
| Diamant | 112.5 | 82 |
| Carbure de silicium | 78.1 | 76 |
| Saphir | 75 | 87 |

TABLEAU II

| Fréquence de répétition : 1 GHz<br>Fréquence acoustique : 100 GHz | | |
|---|---|---|
| Matériau | Epaisseur en $\mu$m | Gain |
| Silicium | 4.2 | 20 |
| Diamant | 9 | 36 |
| Carbure de silicium | 6.1 | 35 |
| Saphir | 6 | 30 |

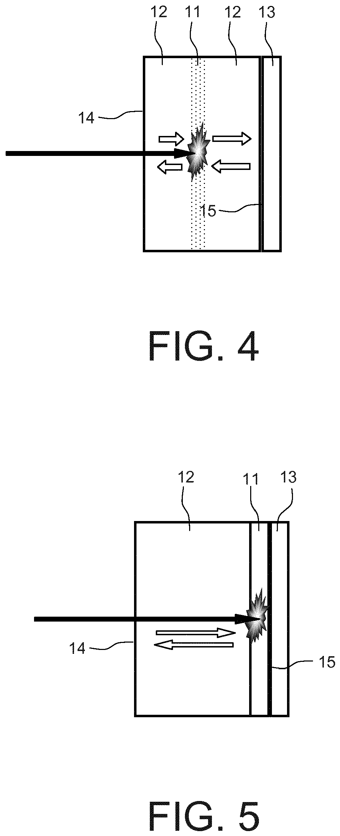

La figure 4 représente un second exemple de réalisation d'un oscillateur selon l'invention. Dans cette réalisation, le milieu de conversion 11 et le milieu de propagation 12 sont réalisés sur un seul et même substrat qui est dopé différemment selon la fonction assurée. Dans cette configuration, comme on le voit sur la figure 4, le milieu de conversion 11 n'est pas nécessairement situé au voisinage d'une des faces du milieu de propagation, mais peut se situer à l'intérieur, au voisinage du centre, par exemple. Ainsi, les impulsions laser traversent tout ou partie du milieu de propagation avant de rencontrer le milieu de conversion. Il suffit que le milieu de propagation soit transparent aux impulsions optiques, ce qui est généralement le cas. Il n'y a pas d'interaction parasite entre les impulsions optiques et les impulsions acoustiques à l'intérieur du milieu de propagation.

La figure 5 représente un troisième exemple de réalisation d'un oscillateur selon l'invention. Dans cette réalisation, l'oscillateur comporte, dans cet ordre, un laser 10 d'émission périodique d'impulsions optiques, un milieu de propagation 12, un milieu de conversion 11 des impulsions optiques en impulsions acoustiques et, enfin, le milieu de couplage 13. Là encore, il suffit que le milieu de propagation soit transparent aux impulsions optiques, ce qui est généralement le cas.

Pour obtenir un gain important, il est impératif que l'ensemble des intensités acoustiques qui contribuent à ce gain et qui sont issues de multiples allers retours soient toutes parfaitement en phase. L'épaisseur acoustique de la cavité doit donc être parfaitement ajustée à la fréquence de répétition du laser d'émission. On estime généralement que cet ajustement doit être fait à moins de 1 % et si possible, à moins de 0.1%. On peut, en prenant des tolérances de construction adéquates, réaliser cet ajustement sans réglages. Mais, les épaisseurs du milieu de propagation étant généralement faibles, il peut se révéler plus intéressant que l'oscillateur comporte des moyens d'ajustement intrinsèques.

Plusieurs solutions techniques sont possibles. L'oscillateur peut comporter des moyens d'ajustement de la période du laser d'émission. On peut y parvenir en modifiant légèrement la longueur d'onde d'émission.

L'oscillateur peut comporter des moyens électriques ou magnétiques ou thermiques d'ajustement de la vitesse de propagation des impulsions acoustiques dans le milieu de propagation, ces moyens dépendant du type de milieu utilisé. On sait que la vitesse du son est notamment sensible à la température.

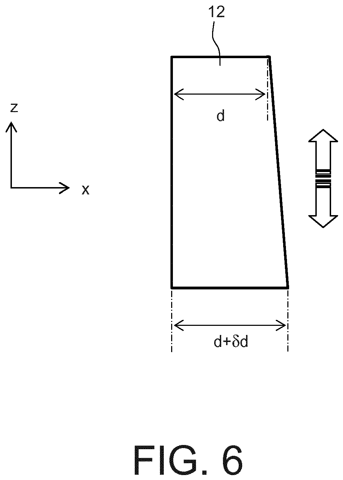

On peut également mettre en place un milieu de propagation dont l'épaisseur est variable selon un axe perpendiculaire à la direction de propagation des impulsions acoustiques comme représenté en figure 6 où l'épaisseur du milieu de propagation 12 varie entre d et d+$\delta$d selon l'axe z perpendiculaire à l'axe de propagation x des ondes acoustiques. Il suffit alors pour ajuster le temps d'aller-retour de déplacer le milieu de propagation selon cet axe z jusqu'à obtenir l'accord entre la période des impulsions optiques et le temps d'aller-retour des impulsions acoustiques. Ce déplacement est symbolisé par une double flèche blanche sur la figure 6.

**Revendications**

1. Oscillateur paramétrique phononique comportant un laser (10) d'émission périodique d'impulsions optiques (IL) brèves, lesdites impulsions présentant une durée de l'ordre de quelques dizaines de femtosecondes à quelques centaines de femtosecondes, un ensemble de génération (11, 12) d'impulsions acoustiques (IA) et un milieu de couplage (13) des impulsions acoustiques avec un objet (O) ledit milieu de couplage permettant auxdites impulsions acoustiques traversant ledit milieu de couplage d'atteindre l'objet, l'ensemble de génération d'impulsions acoustiques comportant une face d'entrée (14), une face de sortie (15), un milieu de conversion (11) des impulsions optiques brèves en impulsions acoustiques et un milieu de propagation (12) desdites impulsions acoustiques, les faces d'entrée et de sortie étant réfléchissantes aux impulsions acoustiques, le milieu de propagation ayant une épaisseur déterminée, la face de sortie étant au contact avec le milieu de couplage,
**caractérisé en ce que** le temps d'aller-retour d'une impulsion acoustique par réflexion sur les faces d'entrée et de sortie, est égal à la période ($\tau$) d'émission du laser, de façon que l'impulsion acoustique réfléchie soit en phase avec l'impulsion acoustique suivante.

2. Oscillateur paramétrique phononique selon la revendication 1, **caractérisé en ce que** l'ensemble de génération d'impulsions acoustiques comporte, dans cet ordre, la face d'entrée, le milieu de conversion, le milieu de propagation et la face de sortie.

3. Oscillateur paramétrique phononique selon la revendication 1, **caractérisé en ce que** l'ensemble de génération d'impulsions acoustiques comporte, dans cet ordre, la face d'entrée, le milieu de propagation, le milieu de conversion et la face de sortie.

4. Oscillateur paramétrique phononique selon la revendication 1, **caractérisé en ce que** le milieu de conversion et le milieu de propagation sont réalisés sur un seul et même substrat, le milieu de conversion étant implanté sur une des faces du milieu de propagation.

5. Oscillateur paramétrique phononique selon la revendication 1, **caractérisé en ce que** le milieu de conversion et le milieu de propagation sont réalisés sur un seul et même substrat, le milieu de conversion étant implanté à l'intérieur du milieu de propagation.

6. Oscillateur paramétrique phononique selon l'une des revendications précédentes, **caractérisé en ce que** l'oscillateur comporte des moyens d'ajustement de la période du laser d'émission.

7. Oscillateur paramétrique phononique selon l'une des revendications précédentes, **caractérisé en ce que** l'oscillateur comporte des moyens électriques ou magnétiques ou thermiques d'ajustement de la vitesse de propagation des impulsions acoustiques dans le milieu de propagation.

8. Oscillateur paramétrique phononique selon l'une des revendications précédentes, **caractérisé en ce que** l'épaisseur du milieu de propagation est variable selon un axe perpendiculaire à la direction de propagation des impulsions acoustiques.

9. Oscillateur paramétrique phononique selon l'une des revendications précédentes, **caractérisé en ce que** les coefficients de réflexion acoustique de la face d'entrée et de la face de sortie sont supérieurs ou égaux à 90%.

10. Oscillateur paramétrique phononique selon l'une des revendications précédentes, **caractérisé en ce que** le laser d'émission est un laser dit « femtoseconde » émettant dans une gamme spectrale comprise entre 680 nanomètres et 1070 nanomètres, sa période étant de 12.5 nanosecondes et la durée des impulsions optiques étant de 100 femtosecondes.

11. Oscillateur paramétrique phononique selon l'une des revendications 1 à 9, **caractérisé en ce que** le laser d'émission est un laser dit « femtoseconde » émettant dans une gamme spectrale comprise entre 750 nanomètres et 900 nanomètres, sa période étant de 1 nanoseconde et la durée des impulsions optiques étant de 100 femtosecondes.

12. Oscillateur paramétrique phononique selon l'une des revendications précédentes, **caractérisé en ce que** le milieu de conversion est un milieu absorbant des impulsions optiques.

13. Oscillateur paramétrique phononique selon l'une des revendications 1 à 11, **caractérisé en ce que** le milieu de conversion est un milieu semi-conducteur ou à boîtes quantiques.

14. Oscillateur paramétrique phononique selon l'une des revendications précédentes, **caractérisé en ce que** le milieu de propagation est du silicium ou du diamant ou du carbure de silicium ou du saphir.

15. Oscillateur paramétrique phononique selon l'une des revendications précédentes, **caractérisé en ce que** le milieu de couplage est un liquide.

**Patentansprüche**

1. Phononischer parametrischer Oszillator mit einem Laser (10) zur periodischen Emission kurzer optischer Impulse (IL), wobei die Impulse eine Dauer in der Größenordnung von einigen zehn Femtosekunden bis einigen hundert Femtosekunden aufweisen, einer Einheit (11, 12) zur Erzeugung akustischer Impulse (IA) und einem Medium (13) zur Kopplung der akustischen Impulse mit einem Objekt (O), wobei das Kopplungsmedium den akustischen Impulsen, die das Kopplungsmedium durchqueren, ermöglicht, das Objekt zu erreichen, wobei die Einheit zur Erzeugung akustischer Impulse eine Eingangsseite (14), eine Ausgangsseite (15), ein Medium (11) zur Umwandlung der kurzen optischen Impulse in akustische Impulse und ein Ausbreitungsmedium (12) für die akustischen Impulse umfasst, wobei die Eingangs- und Ausgangsseite die akustischen Impulse reflektieren, das Ausbreitungsmedium eine bestimmte Dicke hat und die Ausgangsseite mit dem Kopplungsmedium in Kontakt steht, **dadurch gekennzeichnet, dass** die Zeit für den Hin- und Rücklauf eines akustischen Impulses durch Reflexion an der Eingangs- und Ausgangsseite gleich der Periode ($\tau$) der Laseremission ist, so dass der reflektierte akustische Impuls mit dem nächsten akustischen Impuls phasengleich ist.

2. Phononischer parametrischer Oszillator nach Anspruch 1, **dadurch gekennzeichnet, dass** die Anordnung zur Erzeugung akustischer Impulse in dieser Reihenfolge die Eingangsseite, das Umwandlungsmedium, das Ausbreitungsmedium und die Ausgangsseite umfasst.

3. Phononischer parametrischer Oszillator nach Anspruch 1, **dadurch gekennzeichnet, dass** die Anordnung zur Erzeugung akustischer Impulse in dieser Reihenfolge die Eingangsseite, das Ausbreitungsmedium, das Umwandlungsmedium und die Ausgangsseite umfasst.

4. Phononischer parametrischer Oszillator nach Anspruch 1, **dadurch gekennzeichnet, dass** das Umwandlungsmedium und das Ausbreitungsmedium auf ein und demselben Substrat hergestellt sind, wobei das Umwandlungsmedium auf einer der Seiten des Ausbreitungsmediums implantiert ist.

5. Phononischer parametrischer Oszillator nach Anspruch 1, **dadurch gekennzeichnet, dass** das Umwandlungsmedium und das Ausbreitungsmedium auf ein und demselben Substrat hergestellt sind, wobei das Umwandlungsmedium innerhalb des Ausbreitungsmediums implantiert ist.

6. Phononischer parametrischer Oszillator nach einem der vorhergehenden Ansprüche, **dadurch gekennzeichnet, dass** der Oszillator Mittel zum Einstellen der Periode des Emissionslasers umfasst.

7. Phononischer parametrischer Oszillator nach einem der vorhergehenden Ansprüche, **dadurch gekennzeichnet, dass** der Oszillator elektrische oder magnetische oder thermische Anpassungsmittel der Ausbreitungsgeschwindigkeit der akustischen Impulse im Ausbreitungsmedium umfasst.

8. Phononischer parametrischer Oszillator nach einem der vorhergehenden Ansprüche, **dadurch gekennzeichnet, dass** die Dicke des Ausbreitungsmediums entlang einer zur Ausbreitungsrichtung der akustischen Impulse senkrechten Achse variabel ist.

9. Phononischer parametrischer Oszillator nach einem der vorhergehenden Ansprüche, **dadurch gekennzeichnet, dass** die Koeffizienten der akustischen Reflexion der Eingangsseite und der Ausgangsseite größer oder gleich 90% sind.

10. Phononischer parametrischer Oszillator nach einem der vorhergehenden Ansprüche, **dadurch gekennzeichnet, dass** der Emissionslaser ein sogenannter "Femtosekundenlaser" ist, der in einem Spektralbereich von 680 bis 1070 Nanometern emittiert, wobei seine Periode 12,5 Nanosekunden und die Dauer der optischen Impulse 100 Femtosekunden betragen.

11. Phononischer parametrischer Oszillator nach einem der Ansprüche 1 bis 9, **dadurch gekennzeichnet, dass** der Emissionslaser ein sogenannter Femtosekundenlaser ist, der in einem Spektralbereich von 750 bis 900 Nanometer emittiert, wobei seine Periode 1 Nanosekunde beträgt und die Dauer der optischen Impulse 100 Femtosekunden beträgt.

12. Phononischer parametrischer Oszillator nach einem der vorhergehenden Ansprüche, **dadurch gekennzeichnet, dass** das Umwandlungsmedium ein optische Impulse absorbierendes Medium ist.

13. Phononischer parametrischer Oszillator nach einem der Ansprüche 1 bis 11, **dadurch gekennzeichnet, dass** das Umwandlungsmedium ein Halbleiter- oder Quantenboxmedium ist.

14. Phononischer parametrischer Oszillator nach einem der vorhergehenden Ansprüche, **dadurch gekennzeichnet, dass** das Ausbreitungsmedium Silizium oder Diamant oder Siliziumkarbid oder Saphir ist.

15. Phononischer parametrischer Oszillator nach einem der vorhergehenden Ansprüche, **dadurch gekennzeichnet, dass** das Kopplungsmedium eine Flüssigkeit ist.

**Claims**

1. A phonon parametric oscillator comprising a laser (10) for periodically emitting brief optical pulses (IL), said pulses have a duration of about a few tens of femtoseconds to a few hundred femtoseconds; an assembly (11, 12) for generating acoustic pulses (IA) and a medium (13) for coupling the acoustic pulses to an object (O), said coupling medium allowing said acoustic pulses passing through said coupling medium to reach the object, the assembly for generating acoustic pulses comprising an entrance face (14), an exit face (15), a conversion medium (11) for converting the brief optical pulses into acoustic pulses and a propagation medium (12) for propagating said acoustic pulses, the entrance and exit faces being reflective to the acoustic pulses, the propagation medium having a defined thickness, the exit face making contact with the coupling medium,
**characterized in that** the round-trip time of an acoustic pulse due to reflection from the entrance and exit faces, is equal to the emission period (-c) of the laser, so that the reflected acoustic pulse is in phase with the following acoustic pulse.

2. The phonon parametric oscillator as claimed in claim 1, **characterized in that** the assembly for generating acoustic pulses comprises, in this order, the entrance face, the conversion medium, the propagation medium and the exit face.

3. The phonon parametric oscillator as claimed in claim 1, **characterized in that** the assembly for generating acoustic pulses comprises, in this order, the entrance face, the propagation medium, the conversion medium and the exit face.

4. The phonon parametric oscillator as claimed in claim 1, **characterized in that** the conversion medium and the propagation medium are produced on one and the same substrate, the conversion medium being located on one of the faces of the propagation medium.

5. The phonon parametric oscillator as claimed in claim 1, **characterized in that** the conversion medium and the propagation medium are produced on one and the same substrate, the conversion medium being located inside the propagation medium.

6. The phonon parametric oscillator as claimed in one of the preceding claims, **characterized in that** the oscillator comprises means for adjusting the period of the emitting laser.

7. The phonon parametric oscillator as claimed in one of the preceding claims, **characterized in that** the oscillator comprises electrical or magnetic or thermal means for adjusting the propagation speed of the acoustic pulses through the propagation medium.

8. The phonon parametric oscillator as claimed in one of the preceding claims, **characterized in that** the thickness of the propagation medium varies along an axis perpendicular to the propagation direction of the acoustic pulses.

9. The phonon parametric oscillator as claimed in one of the preceding claims, **characterized in that** the acoustic reflection coefficients of the entrance face and of the exit face are higher than or equal to 90%.

10. The phonon parametric oscillator as claimed in one of the preceding claims, **characterized in that** the emitting laser is a so-called "femtosecond" laser that emits in a spectral range comprised between 680 nanometers and 1070 nanometers, its period being of 12.5 nanoseconds and the duration of the optical pulses being of 100 femtoseconds.

11. The phonon parametric oscillator as claimed in one of claims 1 to 9, **characterized in that** the emitting laser is a so-called "femtosecond" laser that emits in a spectral range comprised between 750 nanometers and 900 nanometers, its period being of 1 nanosecond and the duration of the optical pulses being of 100 femtoseconds.

12. The phonon parametric oscillator as claimed in one of the preceding claims, **characterized in that** the conversion medium is a medium that absorbs the optical pulses.

13. The phonon parametric oscillator as claimed in one of claims 1 to 11, **characterized in that** the conversion medium is a semiconductor medium or one with quantum dots.

14. The phonon parametric oscillator as claimed in one of the preceding claims, **characterized in that** the propagation medium is silicon or diamond or silicon carbide or sapphire.

15. The phonon parametric oscillator as claimed in one of the preceding claims, **characterized in that** the coupling medium is a liquid.

# FIG. 1

# FIG. 2

ETAPE 1
T = T0

ETAPE 2
T = T0+τ/2

ETAPE 3
T0+τ/2 <T<T0+τ

ETAPE 4
T = T0+τ

FIG. 3

FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7624640 B, Maris

- US 2012263196 A

**Littérature non-brevet citée dans la description**

- **D. NAVARRO-URRIOS et al.** A self-stabilized cohérent phonon source driven by optical forces. *scientific reports,* 2015, vol. 5 (15733
- **SERGIO S. MAKLER et al.** A source of terahertz cohérent phonons. *Journal of Physics : Condensed Matter,* vol. 10 (26

- **GRUDININ et al.** Phonon laser Action in tunable two level system. *Physical Review Letters,* 2010, vol. 104 (8